# EUROPÄISCHE PATENTSCHRIFT

(11) **EP 2 284 583 B1**
(45) Veröffentlichungstag und Bekanntmachung des Hinweises auf die Patenterteilung: **20.03.2013**
(21) Anmeldenummer: 10007305.5
(22) Anmeldetag: 15.07.2010
(51) Int. Cl.: G02B 6/00, G02B 6/42, B29D 11/00, B60Q 1/00, B60Q 3/00, F21S 8/12, F21V 8/00, G02B 6/38

(54) **Beleuchtungseinrichtung für ein Kraftfahrzeug**
Lighting device for a motor vehicle
Dispositif d'éclairage pour un véhicule automobile

(30) Priorität: 14.08.2009 DE 102009037625
(43) Veröffentlichungstag der Anmeldung: 16.02.2011
(73) Patentinhaber: Automotive Lighting Reutlingen GmbH, 72762 Reutlingen (DE)
(72) Erfinder: Gebauer, Matthias, Dr., 72770 Reutlingen (DE)
(74) Vertreter: Dreiss

(56) Entgegenhaltungen:
- WO-A1-2006/003595
- DE-A1- 10 115 378
- DE-A1- 10 205 694
- DE-A1-102006 034 972
- DE-A1-102007 035 021
- DE-U1- 9 207 943
- FR-A1- 2 730 038
- US-A1- 2008 107 387

## Beschreibung

Die vorliegende Erfindung betrifft eine Beleuchtungseinrichtung für ein Kraftfahrzeug nach dem Oberbegriff des Anspruchs 1 sowie ein Verfahren zur Herstellung einer solchen Beleuchtungseinrichtung nach dem Oberbegriff des Anspruchs 4.

Eine solche Beleuchtungseinrichtung und ein solches Herstellungsverfahren ist jeweils aus der US 2008/0107387 A1 bekannt und betrifft das Problem, dass speziell der in der Nähe der heißen Lichtquelle liegende erste Abschnitt des Lichtleiters durch Thermooxidation zu vergilben droht. Zur Abhilfe sieht die bekannte Schrift einen Verbundlichtleiter aus einem ersten Abschnitt und einem zweiten Abschnitt vor, wobei das Material des ersten Abschnitts temperaturbeständiger als das Material des zweiten Abschnitts sein soll und zwischen der heißen Lichtquelle und dem als dem eigentlichen Lichtleiter dienenden zweiten Abschnitt angeordnet sein soll. Die US 2008/0107387 A1 zeigt eine Verbindung von zwei Lichtleitern, bei der ein zylinderförmiges Ende des einen Lichtleiters von einer sacklochartigen Ausnehmung des anderen Lichtleiters aufgenommen wird. Lichtleiter, die Abschnitte aus unterschiedlichen Materialien aufweisen, die unterschiedlich temperaturbeständig sind, sind auch aus der WO2006/003595 A1; der FR 2 730 038 A1, der DE 102 05 694 A1 und der DE 10 2006 034 972 A1 bekannt. Nach der zuletzt genannten Schrift sollen beide Materialien im infraroten Spektralbereich ein ähnliches Absorptionsverhalten aufweisen, damit der erste Abschnitt möglichst die Strahlungsanteile ausfiltert, die zu einer unerwünschten Erwärmung des zweiten Abschnitts führen würden. Um selbst nicht unzulässig erwärmt zu werden, soll der erste Abschnitt nach Möglichkeit auch nur diese Strahlungsanteile ausfiltern. Zur Erzielung des ähnlichen Absorptionsverhaltens sollen beide Materialien auf dem gleichen Material, zum Beispiel auf Polycarbonat basieren. Dabei sollen dem Material des zweiten Abschnitts geeignete Additive zur Erhöhung der Transmissionsfähigkeit beigemischt sein. Dem Material des ersten Abschnitts sollen dagegen andere Additive beigemischt sein, die die Transmission auch verringern dürfen, wenn sie die Temperaturbeständigkeit erhöhen. Als Beispiel solcher Additive werden Metalle genannt. Als Möglichkeit zur Herstellung des Verbundlichtleiters wird ein Zweikomponentenspritzgussverfahren erwähnt.

Um Lichtleiter vor einer Überhitzung zu schützen, ist es darüber hinaus bekannt, einen Infrarotfilter vor der Einkoppelfläche des Lichtleiters anzuordnen, um eine zu hohe Temperaturbelastung der Lichtleiter zu vermeiden.

Die Verwendung eines Infrarotfilters ist mit mehreren Nachteilen behaftet. Schon um Bauraum und Kosten zu sparen, würde man gern auf ihn verzichten. Ein weiterer Nachteil liegt darin, dass Infrarotfilter die Zahl der Grenzflächen im Lichtweg vergrößern, da ein separates Infrarotfilter zwangsläufig eine Lichteintrittsfläche und eine Lichtaustrittsfläche besitzt. An jeder solchen Grenzfläche treten Fresnel-Verluste auch im Wellenlängenbereich des sichtbaren Lichts auf. Daher schwächen Infrarotfilter auch die Lichtintensität im Wellenlängenbereich des sichtbaren Lichts, was unerwünscht ist.

Vor diesem Hintergrund wird ein Verbundlichtleiter der eingangs genannten Art gegenüber der Verwendung eines separaten Infrarotfilters bevorzugt. Bei dem Verbundlichtleiter der eingangs genannten Art basieren die Materialien beider Abschnitte auf Materialien mit hinreichend ähnlichem Absorptionsverhalten im Infrarotbereich. Die Forderung nach einem gleichen Absorptionsverhalten wird zum Beispiel durch die Verwendung des gleichen Ausgangsmaterials für beide Abschnitte erfüllt. Aus diesem Ausgangsmaterial wird das erste Material durch Zugabe erster Additive erzeugt, die seine thermische Langzeitstabilität zu Lasten seiner Transmission verbessern. Das zweite Material wird dagegen aus dem Ausgangsmaterial durch Zugabe zweiter Additive erzeugt, die seine Transmission verbessern.

Als Folge der Verwendung des gleichen Ausgangsmaterials ergeben sich Einschränkungen der Möglichkeiten, jeden einzelnen der beiden Abschnitte für den jeweils angestrebten Zweck zu optimieren.

Bei einer Verwendung unterschiedlicher Materialien, wie es durch die übrigen eingangs genannten Druckschriften offenbart wird, ergibt sich schon aufgrund von dann ebenfalls unterschiedlichen weiteren Eigenschaften das Problem, die unterschiedlichen Materialien in einem optischen Kontakt miteinander mit ausreichender mechanischer Festigkeit und Dauerhaltbarkeit zu verbinden.

Vor diesem Hintergrund besteht die Aufgabe der Erfindung in der Angabe einer Beleuchtungseinrichtung der eingangs genannten Art, das eine Vergilbung des Lichtleiters aufgrund thermischer Oxidation vermeidet oder zumindest verringert, und bei der sich die Transmission des zweiten Abschnitts optimieren lässt, ohne dabei auf gleiche Ausgangsmaterialien für den ersten und zweiten Abschnitt oder zumindest Materialien mit gleichem IR-Absorptionsverhalten angewiesen zu sein und das eine ausreichend feste und dauerhaltbare Verbindung der beiden Abschnitte aufweist. Mit Blick auf die Verfahrensaspekte der Erfindung besteht ihre Aufgabe in der Angabe eines Verfahrens zur Herstellung einer solchen Beleuchtungseinrichtung.

Diese Aufgabe wird jeweils mit den Merkmalen der unabhängigen Ansprüche gelöst.

Die Festigkeit und Dauerhaltbarkeit der Verbindung ergeben sich durch den Hinterschnitt in Verbindung mit dessen Ausfüllung mit Material des zweiten Abschnitts, dass mit dem übrigen Material des zweiten Abschnitts eine zusammenhängende Struktur bildet.

Dadurch, dass im Bereich der Einkopplung von Licht in den Lichtleiter ein Material mit vergleichsweise höherer Temperaturbeständigkeit verwendet wird, kann auf den Infrarotfilter verzichtet werden. Dadurch fallen die mit der Verwendung des Infrarotfilters einhergehenden Grenzflächen und die daraus resultierenden Intensitätsverluste zunächst weg. Dies gilt gleichermaßen für die erwähnten Kostennachteile.

Sowohl Glas als auch Liquid Silicon Rubber weisen eine sehr hohe Temperaturbeständigkeit auf. Dadurch wird eine Verschlechterung der Transmissionseigenschaften am heißen Ende des Lichtleiters verhindert oder zumindest stark verringert. Die vergleichsweise hohe Temperaturbeständigkeit geht jedoch zum Beispiel bei Glas mit Nachteilen in Bezug auf andere, gewünschte Eigenschaften einher.

Bei Glas als erstem Material tritt das Problem auf, dass sich die Auskopplungsbereiche, meist prismatische Erhöhungen oder Vertiefungen in der Lichtleiteroberfläche, nicht oder nicht kostengünstig genug herstellen lassen. Für den Einkopplungsbereich ist dieser Nachteil nicht relevant, da für den Einkopplungsbereich ein Querschnitt des Lichtleiters genutzt werden kann.

Dadurch, dass der bei der Erfindung verwendete Lichtleiter zwei Abschnitte aus unterschiedlichen Materialien aufweist, wobei der erste Abschnitt den Einkopplungsbereich aufweist und der zweite Abschnitt die Auskopplungsbereiche aufweist, kann im zweiten Abschnitt ein Material verwendet werden, das eine kostengünstige Herstellung von Auskoppelbereichen erlaubt und das eine vergleichsweise hohe Transmission besitzt. Dabei können diese Eigenschaften ohne Rücksicht auf Eigenschaften des Glas- oder LSR-Materials des ersten Abschnitts optimiert werden.

Weitere Vorteile ergeben sich aus den abhängigen Ansprüchen, der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Zeichnungen

Ausführungsbeispiele der Erfindung sind in den Zeichnungen dargestellt und werden in der nachfolgenden Beschreibung näher erläutert. Es zeigen, jeweils in schematischer Form:
- Figur 1: ein Ausführungsbeispiel einer erfindungsgemäßen Beleuchtungseinrichtung;
- Figur 2: eine ringförmige Ausgestaltung eines Lichtleiters;
- Figur 3: eine flächige Ausgestaltung eines Lichtleiters;
- Figur 4: Ausgestaltungen von Lichtleitern mit einem ersten Abschnitt aus Glas; und die
- Fig. 5 - 7: weitere Ausgestaltungen von Lichtleitern mit einem ersten Abschnitt aus Glas.

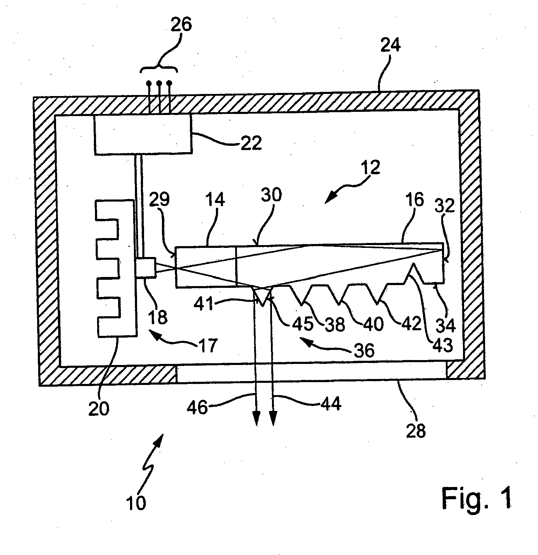

Im Einzelnen zeigt die Figur 1 eine Beleuchtungseinrichtung 10 für ein Kraftfahrzeug mit einem Lichtleiter 12, der wenigstens einen ersten Abschnitt 14 und einen zweiten Abschnitt 16 aufweist. Die Beleuchtungseinrichtung 10 weist ferner eine Lichtquelle 17 auf. In der dargestellten Ausgestaltung ist die Lichtquelle eine Leuchtdiode 18 oder eine Anordnung mehrerer Leuchtdioden, die auf einem Kühlkörper 20 angeordnet sind. Die Leuchtdiode 18 wird von einem Steuergerät 22 gesteuert und mit elektrischer Energie gespeist. In der dargestellten Ausgestaltung ist das Steuergerät 22 innerhalb eines Gehäuses 24 der Beleuchtungseinrichtung 10 angeordnet und weist aus dem Gehäuse 24 herausgeführte Anschlüsse 26 zur Versorgung mit elektrischer Energie und zur Steuerungskommunikation mit weiteren Steuergeräten und/oder Schaltern eines Kraftfahrzeugs auf. Die Beleuchtungseinrichtung weist ferner eine lichtdurchlässige Scheibe 28 als Teil des Gehäuses 24 auf.

Das im Betrieb der Leuchtdiode erzeugte Licht wird zumindest teilweise über einen Einkopplungsbereich 29 in den ersten Abschnitt 14 des Lichtleiters 12 eingekoppelt und, gegebenenfalls nach einfacher oder mehrfacher Totalreflektion an Grenzflächen 30, 32 und 34 des Lichtleiters 12, über Auskopplungsbereiche 36, 38, 40, 42, 43 aus dem zweiten Abschnitt 16 des Lichtleiters 12 ausgekoppelt. Die Auskopplungsbereiche 36, 38, 40, 42, 43 sind z. B. Prismen, die entweder, wie im Fall der Auskopplungsbereiche 36, 38, 40, 42, als Erhebungen aus dem übrigen Material des Lichtleiters 12 herausragen, oder, wie im Fall des Auskopplungsbereichs 43, als Vertiefung im übrigen Material des Lichtleiters 12 realisiert sind. Wesentlich ist in jedem Fall, dass lichtbrechende Flächen 41, 45 der Auskopplungsbereiche 36, 38, 40, 42, 43 so angeordnet sind, das ein Teil des in dem Lichtleiter 12 propagierenden Lichtes dort nicht total reflektiert wird, sondern den Lichtleiter 12 verlässt. Stellvertretend für alle ausgekoppelten Lichtstrahlen sind in der Figur 1 zwei Lichtstrahlen 44, 46 eingezeichnet, die an dem Auskoppelbereich 36 aus dem zweiten Abschnitt 16 des Lichtleiters 12 ausgekoppelt werden.

Beim Betrieb der Beleuchtungseinrichtung 10 wird nur ein Teil der in die Leuchtdiode(n) 18 eingespeisten elektrischen Energie in Licht verwandelt. Der Rest erwärmt die Leuchtdiode(n) 18 und den Kühlkörper 20, dessen Aufgabe darin besteht, die beim Betrieb der Leuchtdiode(n) 18 freiwerdende Wärme aufzunehmen und abzuführen, um eine unzulässig hohe Erwärmung der Leuchtdiode(n) 18 zu verhindern. Beim Betrieb von Leuchtdioden 18 in Beleuchtungseinrichtungen 10 von Kraftfahrzeugen erreichen die Leuchtdioden 18 und die Kühlkörper 20 Temperaturen im Bereich von 150°C. Aufgrund der unmittelbaren Nähe des Einkopplungsbereichs 29 des Lichtleiters 12 zur heißen Leuchtdiode 18 und dem heißen Kühlkörper 20 erhitzt sich der Einkopplungsbereich 29 des Lichtleiters 12 auf ähnlich hohe Temperaturwerte.

Typische Lichtleitermaterialien wie PMMA (Polymethylacryalat) oder PC (Polycarbonat) verändern ihre optischen Eigenschaften bei solch hohen Temperaturen in nachteiliger Weise. Dies gilt insbesondere für die Transmissionseigenschaften, die für die Funktion als Lichtleiter wesentlich sind. Diese Transmissionseigenschaften verschlechtern sich durch ein Vergilben oder eine Schwärzung des Lichtleitermaterials. Um solche Einbußen der Transmissionseigenschaften zu verhindern, weist der Lichtleiter 12 die zwei Abschnitte 14, 16 aus unterschiedlichen Materialien auf, die sich durch ihre Temperaturbeständigkeit unterscheiden. Dabei weist der erste Abschnitt 14 den wenigstens einen Einkopplungsbereich 29 und eine im Vergleich zum zweiten Abschnitt 16 höhere Temperaturbeständigkeit auf.

Sowohl Glas als auch LSR als alternative Materialien für den ersten Abschnitt sind auch weit oberhalb der genannten 150°C, die im Betrieb der Leuchtdiode 18 erreicht werden, noch langzeitstabil transparent und damit temperaturbeständig. Die entsprechenden Werte für Glas liegen sogar noch fast eine ganze Größenordnung darüber.

Der zweite Bereich 16 zeichnet sich insbesondere dadurch aus, dass er die Auskopplungsbereiche 36, 38, 40, 42, 43 aufweist. Die auskoppelnde Wirkung dieser Bereiche 36, 38, 40, 42, 43 ergibt sich dadurch, dass die Oberflächen der Auskopplungsbereiche 36, 38, 40, 42, 43 gegenüber benachbarten Bereichen der Oberfläche des Lichtleiters 12 verkippt sind. Als Folge dieser Verkippung werden Lichtstrahlen 44, 46, die aus bestimmten Richtungen auftreffen, an den benachbarten Bereichen total reflektiert, während sie die auf die Oberflächen der Auskopplungsbereiche 36, 38, 40, 42, 43 unter Winkeln auftreffen, bei denen keine Totalreflektion stattfindet.

Eine bevorzugte Ausgestaltung sieht vor, dass als zweites Material Kunststoff verwendet wird. Die für eine Verwendung als zweites Material erforderlichen Eigenschaften besitzen z. B. PMMA und PC, sodass in weiteren Ausgestaltungen PMMA oder PC als zweites Material verwendet wird.

Sowohl die Glas/Kunststoff-Materialpaarung als auch die LSR/Kunststoff-Materialpaarung lässt eine Herstellung des Lichtleiters 12 zu, bei der beide Materialien mit einem direkten optischen Kontakt und damit ohne unnötige Fresnel-Verluste an Grenzflächen zur Luft ineinander übergehen. Bevorzugte Ausgestaltungen sehen daher Lichtleiter mit einem solchen direkten optischen Kontakt zwischen dem ersten Abschnitt aus Glas oder LSR und dem zweiten Abschnitt aus dem zweiten Material vor. Außerdem sollten die Brechungsindizes beider Materialien möglichst nahe beieinander liegen, um die Fresnel-Verluste soweit wie möglich zu minimieren.

Ein solcher direkter optischer Kontakt kann bei der Verwendung von Glas oder LSR als erstem Material und eines Kunststoffes als zweitem Material durch ein Spritzgussverfahren realisiert werden. Dazu wird in einem ersten Schritt des Herstellungsverfahrens zunächst der erste Abschnitt 14 aus Liquid Silicon Rubber oder aus Glas erzeugt. Anschließend wird der zweite Abschnitt 16 an den ersten Abschnitt 14 durch einen Spritzgussschritt angespritzt. Dabei wird das in dem Spritzgusschritt gespritzte Material des zweiten Abschnitts in flüssiger Form an eine Grenzfläche des ersten Abschnitts angespritzt. Dabei entsteht an der Grenzfläche zwischen beiden Materialien der gewünschte optische Kontakt.

Der erste Abschnitt wird bevorzugt gegossen, spritzgegossen oder aus einem Rohling gepresst. Er wird ferner bevorzugt als Einlegeteil erzeugt und beim Anspritzen des zweiten Abschnitts durch komplementär ausgebildete Formschlusselemente mechanisch formschlüssig mit dem zweiten Abschnitt verbunden.

Der erste Abschnitt ist vergleichsweise klein. Typische Abmessungen sind 20 bis 30 mm, während typische Längen des gesamten Lichtleiters auch zwischen 10 cm und 1,5 m liegen können. Da sich eine hohe Oberflächengüte bei der Herstellung bei kleinen Teilen leichter erzielen lässt als bei größeren Teilen, ergibt sich bei der Herstellung des ersten Abschnitts eine vergleichsweise hohe Oberflächengüte. Da der erste Abschnitt darüber hinaus sehr temperaturbeständig ist, wird diese hohe Oberflächengüte beim Anspritzen des flüssigen zweiten Materials nicht beeinträchtigt, was insgesamt zu einer hohen Qualität des optischen Kontakts zwischen den beiden Abschnitten im fertigen Zustand beiträgt.

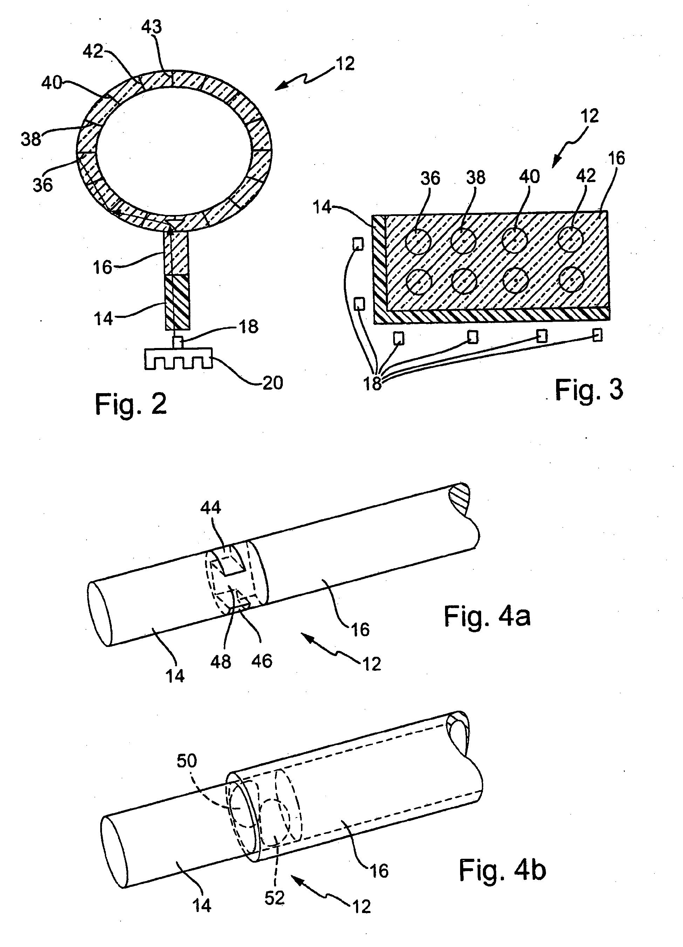

Durch das Spritzgießen ergibt sich als weiterer Vorteil ein hohes Maß an Freiheit bei der Gestaltung der Lichtleiter. So zeigt die Figur 2 einen ringförmigen Lichtleiter 12 mit radial angeordneten Auskoppelbereichen 36, 38, 40, 42, 43, während die Figur 3 einen flächigen Lichtleiter 12 zeigt. Dabei bezeichnen gleiche Bezugszeichen in den Figuren jeweils Elemente mit jeweils gleicher Funktion. Die Auskoppelelemente 36, 38, 40, 42, 43 sind in der Figur 2 so angeordnet, dass das Licht bevorzugt in Richtung einer Flächennormalen zur Zeichenebene, also senkrecht zur Zeichenebene, ausgekoppelt wird.

Figur 3 zeigt eine Ausgestaltung, bei der das Licht mehrerer Leuchtdioden 18 in einen flächigen Lichtleiter 12 eingekoppelt wird. Auch hier findet die Auskopplung bevorzugt senkrecht zur Zeichenebene statt, wobei als Auskoppelelemente 36, 38, 40, 42, 43 kegelförmige Erhebungen und/oder Vertiefungen im Material des zweiten Abschnitts 16 verwendet werden.

Nachdem der erste Abschnitt 14 in Form eines erkalteten Glasteils oder LSR-Teils in das Werkzeug, also in die Spritzgussform, eingelegt worden ist, wird der Kunststoff des zweiten Abschnitts so um zumindest einen Teil des Körpers des ersten Abschnitts herumgespritzt, dass sich ein optischer Kontakt zwischen dem Glas oder LSR des ersten Abschnitts und dem Kunststoff des zweiten Abschnitts einstellt. Figur 4 zeigt im Teil a und im Teil b jeweils ein Ausführungsbeispiel, das sich zum Einlegen und Umspritzen eignet und dabei zu einer stabilen Verbindung zwischen dem Glas des ersten Abschnitts und dem Kunststoff des zweiten Abschnitts führt. Dabei ist wesentlich, dass der Körper des ersten Abschnitts 14 einen Hinterschnitt aufweist, sodass sich der erkaltete Kunststoff des zweiten Abschnitts 16 formschlüssig mit dem ersten Abschnitt 14 verbindet.

Die Figuren 4a und 4b zeigen jeweils eine Ausgestaltung, bei der der erste Abschnitt 14 und der zweite Abschnitt 16 zusätzlich durch komplementär ausgebildete Formschlusselemente 44, 46, beziehungsweise 50, 52 mechanisch formschlüssig miteinander verbunden sind.

In der Ausgestaltung, die in der Fig. 4a dargestellt ist, weist der erste Abschnitt 14 einen hinterschnittenen Bereich 44, 46 als Formschlusselement auf. Der hinterschnittene Bereich stellt eine Ausnehmung aus dem Glaskörper dar. In der Darstellung der Fig. 4a liegt Glasmaterial links von der Ausnehmung 44, 46, rechts von der Ausnehmung 44, 46 und in vertikaler Richtung zwischen den Ausnehmungen 44 und 46. Zur Verdeutlichung ist ein an die Ausnehmungen 44, 46 angrenzender Bereich aus Glasmaterial mit 48 bezeichnet. Die Ausnehmungen 44, 46 sind durch einen hinter dem Bereiche 48 liegenden weiteren ausgenommenen Bereich miteinander und einer rechtsseitigen Stirnfläche des ersten Abschnitts 14 verbunden, die an eine linksseitige Stirnfläche des zweiten Abschnitts 16 angrenzt. Beim Anspritzen des zweiten Materials an den als Einlegeteil in der verwendeten Spritzgussform liegenden ersten Abschnitt 14 werden die Bereiche 44, 46 und der hinter dem Bereich 48 liegende ausgenommene Bereich mit dem zweiten Material ausgefüllt. Dabei bildet das zweite Material in dem hinterschnittenen Bereich mit dem übrigen zweiten Material des zweiten Abschnitts 16 eine zusammenhängende Struktur.

In der alternativen Ausgestaltung, die in der Fig. 4b dargestellt ist, weist der erste Abschnitt 14 wenigstens einen radial auswärts gerichteten Vorsprung 50, 52 als Formschlusselement auf, der von einer komplementären Ausnehmung des zweiten Materials als komplementärem Formschlusselement umschlossen wird. Alternativ kann der erste Abschnitt 14 wenigstens eine radial einwärts gerichtete Ausnehmung als Formschlusselement aufweisen, die vom Material des zweiten Abschnitts als komplementärem Formschlusselement ausgefüllt ist, wobei das zweite Material des komplementären Formschlusselements jeweils mit dem übrigen zweiten Material des zweiten Abschnitts eine zusammenhängende Struktur bildet.

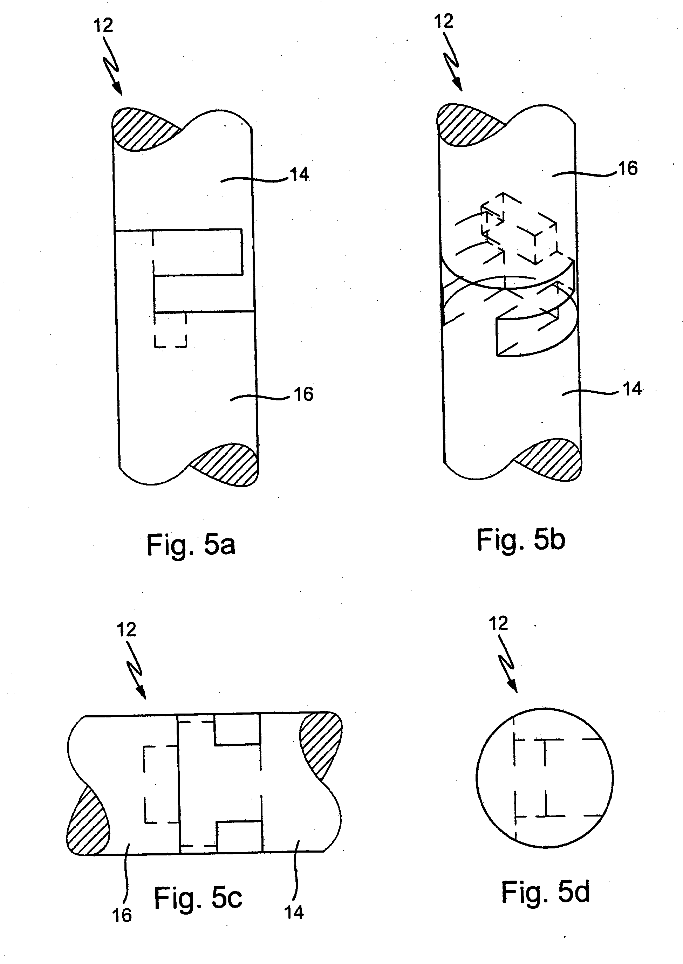

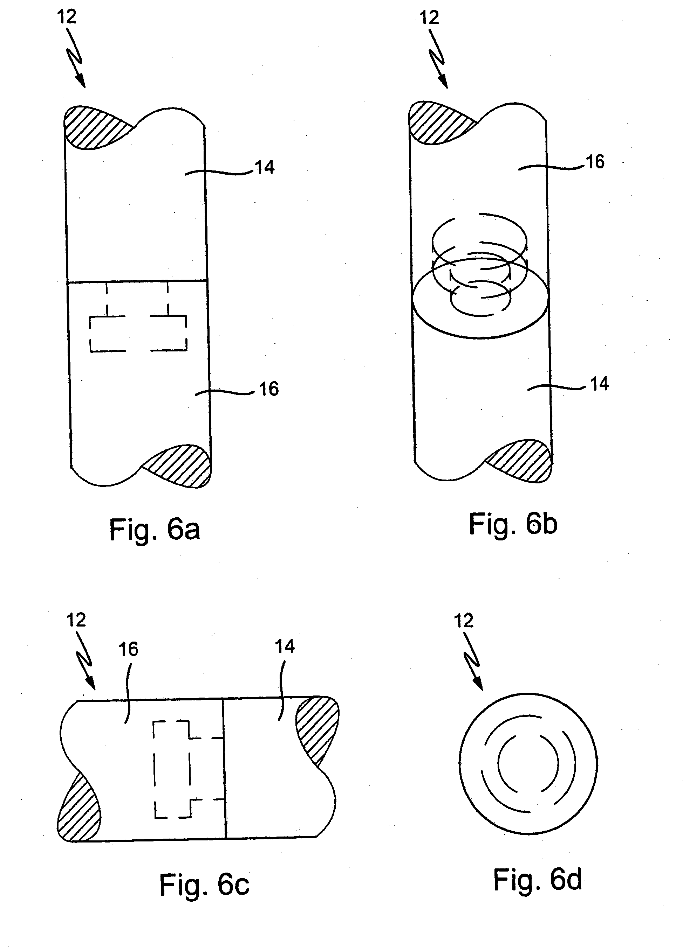

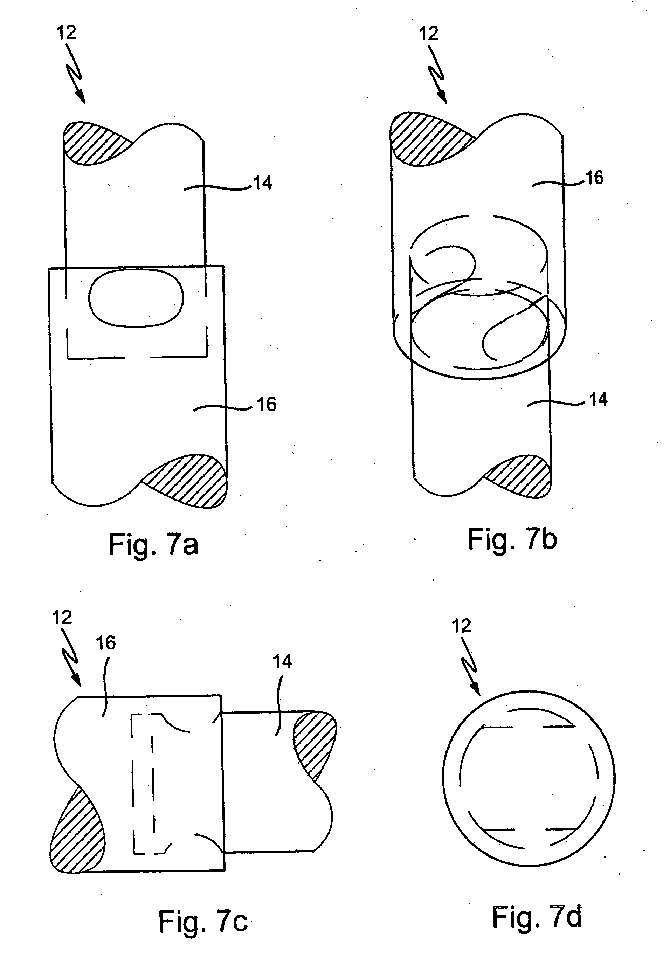

Die Figuren 5, 6 und 7 zeigen weitere Ausgestaltungen von Lichtleitern 12 mit Abschnitten 14 und 16, die jeweils komplementäre Formschlusselemente aufweisen. Dabei zeigt die Teilfigur a) jeweils eine Seitenansicht, die Teilfigur b) jeweils eine isometrische Ansicht, die Teilfigur c) jeweils eine Ansicht von rechts und die Teilfigur 5d) jeweils eines Vorderansicht.

Allen hier vorgestellten Ausgestaltungen ist gemeinsam, dass am Ort der höchsten thermischen Belastung, also in der Nähe der Lichtquelle 17, das Material mit der höheren Temperaturbeständigkeit eingesetzt wird. Bereits nach wenigen mm, nämlich nach etwa 20 mm bis 30 mm, ist die thermische Belastung im Lichtleitermaterial des ersten Abschnitts 14 schon wesentlich geringer und das Licht wird bei der erfindungsgemäßen Beleuchtungseinrichtung ohne oder mit nur sehr geringern Fresnel-Verlusten in den Kunststoff des zweiten Abschnitts 16 eingekoppelt. Der zweite Kunststoff zeichnet sich insbesondere durch eine hohe Transmission (d. h. eine geringe Absorption) aus, sodass sich auch Lichtleiter mit für Kraftfahrzeug Beleuchtungseinrichtung typischen Längen von 10 cm bis circa 1,5 m mit ausreichend hoher Transmission auch bei starker thermischer Belastung am Ort der Lichteinkopplung realisieren lassen.

Es versteht sich, dass die Erfindung nicht auf eine Verwendung in Verbindung mit Leuchtdioden 18 als Lichtquelle 17 beschränkt ist und auch in Verbindung mit anderen, Wärme entwickelnden Lichtquellen, insbesondere mit Halogenlampen oder Gasentladungslampen, eingesetzt werden kann.

## Patentansprüche

1. Beleuchtungseinrichtung (10) für ein Kraftfahrzeug, mit einem Lichtleiter (12), der wenigstens einen Einkopplungsbereich (29) und wenigstens einen Auskopplungsbereich (38), (40), (42), (43) aufweist und der dazu eingerichtet ist, über einen Einkopplungsbereich (29) eingekoppeltes Licht zu den Auskopplungsbereichen (38), (40), (42), (43) zu leiten, wobei der Lichtleiter (12) zwei Abschnitte (14), (16) aus unterschiedlichen Materialien aufweist, die sich durch ihre Temperaturbeständigkeit unterscheiden, wobei ein erster Abschnitt (14) den wenigstens einen Einkopplungsbereich (29) aufweist und aus einem ersten Material mit vergleichsweise höherer Temperaturbeständigkeit besteht und wobei ein zweiter Abschnitt (16) die Auskopplungsbereiche (38), (40), (42), (43) aufweist und aus einem zweiten Material mit vergleichsweise geringerer Temperaturbeständigkeit besteht, wobei der erste Abschnitt (14) aus Liquid Silicon Rubber oder aus Glas besteht, beide Materialien mit einem direkten optischen Kontakt ineinander übergehen, wobei der erste Abschnitt (14) und der zweite Abschnitt (16) zusätzlich durch komplementär ausgebildete Formschlusselemente (44, 46; 50, 52) mechanisch formschlüssig miteinander verbunden sind, **dadurch gekennzeichnet, dass** der erste Abschnitt (14) einen hinterschnittenen Bereich (44, 46) als Formschlusselement aufweist, der mit dem zweiten Material ausgefüllt ist, wobei das zweite Material in dem hinterschnittenen Bereich mit dem übrigen zweiten Material des zweiten Abschnitts (16) eine zusammenhängende Struktur bildet.

2. Beleuchtungseinrichtung nach Anspruch 1, **dadurch gekennzeichnet, dass** der erste Abschnitt (14) wenigstens einen radial auswärts gerichteten Vorsprung (50, 52) als Formschlusselement aufweist, der von einer komplementären Ausnehmung des zweiten Materials als komplementärem Formschlusselement umschlossen wird und/oder dass der erste Abschnitt (14) wenigstens eine radial einwärts gerichtete Ausnehmung als Formschlusselement aufweist, die vom Material des zweiten Abschnitts als komplementärem Formschlusselement ausgefüllt ist, wobei das zweite Material des komplementären Formschlusselements jeweils mit dem übrigen zweiten Material des zweiten Abschnitts (16) eine zusammenhängende Struktur bildet.

3. Beleuchtungseinrichtung (10) nach einem der Ansprüche 1 bis 2, **gekennzeichnet durch** PMMA oder PC als zweites Material.

4. Verfahren zur Herstellung einer Beleuchtungseinrichtung (10) für ein Kraftfahrzeug, die einen Lichtleiter (12) mit wenigstens einem Auskopplungsbereich (38), (40), (42), (43) aufweist, der dazu eingerichtet ist, über einen Einkopplungsbereich (29) eingekoppeltes Licht zu den Auskopplungsbereichen (38), (40), (42), (43) zu leiten, wobei der Lichtleiter (12) aus zwei unterschiedlichen Materialien hergestellt wird, die sich durch ihre Temperaturbeständigkeit unterscheiden, wobei aus einem ersten Material mit vergleichsweise hoher Temperaturbeständigkeit ein erster Abschnitt hergestellt wird, der den wenigstens einen Einkopplungsbereich (29) aufweist, und wobei aus einem zweiten Material mit vergleichsweise geringerer Temperaturbeständigkeit ein zweiter Abschnitt hergestellt wird, der die Auskopplungsbereiche (38), (40), (42), (43) aufweist, wobei zunächst der erste Abschnitt (14) aus Liquid Silicon Rubber oder aus Glas erzeugt wird und der zweite Abschnitt (16) an den ersten Abschnitt (14) durch einen Spritzgussschritt angespritzt wird, bei der Herstellung des Lichtleiters (12)ein Übergang zwischen den beiden Materialien erzeugt wird, über den beide Materialien in einem direkten optischen Kontakt ineinander übergehen, der erste Abschnitt (14) als Einlegeteil erzeugt wird, das beim Anspritzen des zweiten Abschnitts (16) durch komplementär ausgebildete Formschlusselemente (44, 46; 50, 52) mechanisch formschlüssig mit dem zweiten Abschnitt (16) verbunden wird, **dadurch gekennzeichnet, dass** der erste Abschnitt (14) mit einem Hinterschnitt (44, 46) als Formschlusselement erzeugt wird, der beim Anspritzen des zweiten Materials ausgefüllt wird, so dass das zweite Material in dem hinterschnittenen Bereich (44, 46) mit dem übrigen zweiten Material des zweiten Abschnitts (16) eine zusammenhängende Struktur bildet.

5. Verfahren nach Anspruch 4, **dadurch gekennzeichnet, dass** der erste Abschnitt (14) als wenigstens einen radial auswärts gerichteten Vorsprung (50, 52) aufweisendes Einlegeteil erzeugt wird, und dass der Vorsprung (50, 52) beim Anspritzen des zweiten Materials von einer komplementären Ausnehmung des zweiten Materials als zum Vorsprung komplementären Formschlusselement umschlossen wird und/oder dass der erste Abschnitt (14) als wenigstens eine radial einwärts gerichtete Ausnehmung aufweisendes Einlegeteil erzeugt wird, und dass die Ausnehmung beim Anspritzen des zweiten Materials von diesem als zur Ausnehmung komplementärem Formschlusselement ausgefüllt wird, wobei das zweite Material des komplementären Formschlusselements jeweils mit dem übrigen zweiten Material des zweiten Abschnitts (16) eine zusammenhängende Struktur bildet.

## Claims

1. A lighting device (10) for a motor vehicle, having an optical waveguide (12), which optical waveguide has at least one input region (29) and at least one output region (38), (40), (42), (43) and is arranged for conducting light, which has been input via an input region (29), to the output region (38), (40), (42), (43), the optical waveguide (12) having two portions (14), (16) comprising different materials, which differ in their temperature stability, and a first portion (14) has the at least one input region (29) and comprises a first material of comparatively higher temperature stability, and a second portion (16) has the output regions (38), (40), (42), (43) and comprises a second material of comparatively lesser temperature stability, and the first portion (14) comprises liquid silicone rubber or glass and the two materials merge with one another in a direct optical contact, and the first portion (14) and the second portion (16) are additionally joined mechanically in form-locking fashion to one another by complementary form-locking elements (44, 46; 50, 52), **characterized in that** the first portion (14) has an undercut region (44, 46) as a form-locking element, which is filled with the second material, and the second material in the undercut region forms a cohesive structure together with the remaining second material of the second portion (16).

2. The lighting device according to claim 1, **characterized in that** the first portion (14) has at least one radially outward-oriented protrusion (50, 52) as a form-locking element, which is surrounded by a complementary recess in the second material as a complementary form-locking element, and/or that the first portion (14) has at least one radially inward-oriented protrusion as a form-locking element, which is filled with the material of the second portion as a complementary form-locking element, and the second material of the complementary form-locking element forms a cohesive structure together with the remaining second material of the second portion (16).

3. The lighting device (10) according to one of claims 1-2, **characterized by** PMMA or PC as the second material.

4. A method for producing a lighting device (10) for a motor vehicle, which lighting device has an optical waveguide (12) with at least one output region (38), (40), (42), (43) that is arranged for conducting light, which has been input via an input region (29), to the output regions (38), (40), (42), (43), and the optical waveguide (12) is produced from two different materials, which differ in their temperature stability, and from a first material of comparatively high temperature stability, a first portion is produced, which has the at least one input region (29), and from a second material of comparatively lesser temperature stability, a second portion is produced, which has the output regions (38), (40), (42), (43), and first, the first portion (14) is made from liquid silicone rubber or glass, and the second portion (16) is integrally injection molded onto the first portion (14) by means of an injection molding step; in the production of the optical waveguide (12), a transition between the two materials is made, by way of which transition the two materials merge with one another with a direct optical contact; the first portion (14) is made as an inlay part, which upon the integral injection molding of the second portion (16) is joined mechanically in form-locking fashion to the second portion (16) by means of complementary form-locking elements (44, 46; 50, 52), **characterized in that** the first portion (14) is made with an undercut (44, 46) as a form-locking element, which is filled upon the integral injection molding of the second material in such a way that the second material in the undercut region (44, 46) forms a cohesive structure together with the remaining second material of the second portion (16).

5. The method according to claim 4, **characterized in that** the first portion (14) is made as an inlay part having at least one radially outward-oriented protrusion (50, 52), and that upon the integral injection molding of the second material, the protrusion (50, 52) is surrounded by a complementary recess in the second material as a form-locking element complementary to the protrusion, and/or that the first portion (14) is made as at least one inlay part having a radially inward-oriented protrusion, and that upon the integral injection molding of the second material, the recess is filled by the second material as a form-locking element complementary to the recess, and the second material of the complementary form-locking element forms a cohesive structure together with the remaining second material of the second portion (16).

## Revendications

1. Dispositif d'éclairage (10) pour un véhicule automobile, doté d'un conducteur de lumière (12) comprenant au moins une zone d'introduction (29) et au moins une zone d'extraction (38), (40), (42), (43) et conçu pour conduire une lumière injectée par une zone d'introduction (29) vers les zones d'extraction (38), (40), (42), (43), le conducteur de lumière (12) comprenant deux parties (14), (16) composées de matériaux différents se différenciant par leur résistance à la température, une première partie (14) comprenant la ou les zones d'introduction (29) et étant constituée d'un premier matériau présentant une résistance à la température comparativement plus élevée et une seconde partie (16) comprenant les zones d'extraction (38), (40), (42), (43) et étant constituée d'un second matériau présentant une résistance à la température comparativement moins élevée, la première partie (14) étant constituée de caoutchouc de silicone liquide ou de verre, les deux matériaux se prolongeant l'un dans l'autre avec un contact optique direct, la première partie (14) et la seconde partie (16) étant reliées en outre ensemble mécaniquement par complémentarité de forme par des éléments de complémentarité de forme (44, 46; 50, 52) conçus de façon complémentaire, **caractérisé en ce que** la première partie (14) comprend comme élément de complémentarité de forme une zone contre-dépouillée (44, 46) remplie du second matériau, le second matériau formant dans la zone contre-dépouillée avec le second matériau restant de la seconde partie (16) une structure continue.

2. Dispositif d'éclairage selon la revendication 1, **caractérisé en ce que** la première partie (14) comprend comme élément de complémentarité de forme au moins une partie faisant saillie (50, 52) orientée radialement vers l'extérieur et entourée par un évidement complémentaire du second matériau en tant qu'élément de complémentarité de forme et/ou **en ce que** la première partie (14) comprend comme élément de complémentarité de forme au moins un évidement orienté radialement vers l'intérieur et rempli du matériau de la seconde partie comme élément de complémentarité de forme complémentaire, le second matériau de l'élément de complémentarité de forme complémentaire formant respectivement avec le second matériau restant de la seconde partie (16) une structure continue.

3. Dispositif d'éclairage (10) selon l'une des revendications 1 à 2, **caractérisé par** du PMMA ou du PC comme second matériau.

4. Procédé de fabrication d'un dispositif d'éclairage (10) pour un véhicule automobile, ledit dispositif comprenant un conducteur de lumière (12) doté d'au moins une zone d'extraction (38), (40), (42), (43) et conçu pour conduire une lumière introduite par une zone d'introduction (29) vers les zones d'extraction (38), (40), (42), (43), le conducteur de lumière (12) étant composé de deux matériaux différents se différenciant par leur résistance à la température, une première partie comprenant la ou les zones d' introduction (29) étant constituée d'un premier matériau présentant une résistance à la température comparativement plus élevée et une seconde partie étant constituée d'un second matériau présentant une résistance à la température comparativement moins élevée et comprenant les zones d'extraction (38), (40), (42), (43), la première partie (14) étant tout d'abord constituée de caoutchouc de silicone liquide ou de verre et la seconde partie (16) étant coulée par injection sur la première partie (14) au cours d'une étape de moulage par injection, un passage par l'intermédiaire duquel les deux matériaux se prolongent l'un dans l'autre dans un contact optique direct étant produit entre les deux matériaux lors de la fabrication du conducteur de lumière (12), la première partie (14) étant produite comme une pièce d'insertion reliée mécaniquement par complémentarité de forme à la seconde partie (16) par des éléments de complémentarité de forme (44, 46; 50, 52) conçus de manière complémentaire lors de la coulée par injection de la seconde partie (16), **caractérisé en ce que** la première partie (14) est produite avec une contre-dépouille (44, 46) comme élément de complémentarité de forme, ladite contre-dépouille étant remplie lors de la coulée par injection du second matériau, de sorte que le second matériau dans la zone contre-dépouillée (44, 46) forme avec le second matériau restant de la seconde partie (16) une structure continue.

5. Procédé selon la revendication 4, **caractérisé en ce que** la première partie (14) est produite comme au moins une pièce d'insertion comprenant une partie faisant saillie (50, 52) orientée radialement vers l'extérieur, et **en ce que** la partie faisant saillie (50, 52) est entourée, lors de la coulée par injection du second matériau, par un évidement complémentaire du second matériau comme élément de complémentarité de forme complémentaire de la partie faisant saillie, et/ou **en ce que** la première partie (14) est produite comme au moins une pièce d'insertion comprenant un évidement orienté radialement vers l'intérieur, et **en ce que** l'évidement est rempli, lors la coulée par injection du second matériau, par cet élément de complémentarité de forme complémentaire de l'évidement, le second matériau de l'élément de complémentarité de forme complémentaire formant respectivement avec le second matériau restant de la seconde partie (16) une structure continue.
